Europäisches Patentamt

European Patent Office

Office européen des brevets

(11) Publication number: **0 429 158 A2**

## EUROPEAN PATENT APPLICATION

(21) Application number: 90301913.1

(22) Date of filing: 22.02.90

(51) Int. Cl.5: **H01H 47/24,** H01H 9/56, H05B 1/02

(30) Priority: 17.11.89 US 438739

(43) Date of publication of application:
29.05.91 Bulletin 91/22

(84) Designated Contracting States:
**DE FR GB IT NL**

(71) Applicant: **Polster, Louis S.**
**1017 E. Fairmount Road**
**Burbank California 91501(US)**

(72) Inventor: **Polster, Louis S.**
**1017 E. Fairmount Road**
**Burbank California 91501(US)**

(74) Representative: **Abnett, Richard Charles et al**
**REDDIE & GROSE 16 Theobalds Road**
**London WC1X 8PL(GB)**

(54) Relay with control ciruit to minimize arcing.

(57) A relay (10) has contacts (44,46) to control delivery of AC power to a load (28), and includes a sensor (64) mounted for observing any arc at the relay contacts, and a control circuit (70) which controls the time of subsequent actuation or deactuation of the relay with respect to the AC power supply so that the relay contracts open or close substantially at a zero crossing point of the AC current, so as to minimize relay contact arcing, per EP-A2-0 349 273. The sensor and control circuit (70) are mounted within the relay housing (32,34) to make a simple plug-in unit.

FIG.1

FIG. 2

EP 0 429 158 A2

2

## RELAY WITH CONTROL CIRCUIT TO MINIMIZE ARCING

This invention is directed to a relay having a control circuit therein so that, by controlling the operating or dropout point of the relay so that it opens or closes at a zero current point in the AC load circuit, it eliminates arcing at the relay contacts.

Current is delivered to an alternating current load through the contacts of a relay. When the load is to be switched off or on, the relay is actuated or deactuated. When the relay contacts open while current is flowing therethrough, an arc is drawn until the next zero current point, and this arc burns the relay contacts. Similar arcing occurs if contact closure is made at a non-zero current point. It is this arc burning of the relay contacts which reduces relay life. Accordingly, to achieve greater relay life, it is desirable to reduce or eliminate arcing upon the opening or closing of the relay contacts.

## SUMMARY OF THE INVENTION

According to the invention there is provided a relay comprising a fixed contact and a movable contact for connection to a power supply source and a load for controlling the flow of current from the source to the load, drive means connected to said movable contact for moving said movable contact into and out of contact with said fixed contact to control current supply to the load, observation means positioned adjacent said relay contact for observing electric arcing between said contacts occurring during movement of said movable contact with respect to said fixed contact, a control circuit, a relay housing with said contacts, said drive means, said observation means and said control circuit mounted on said relay housing, command signal connection means forming part of said control circuit for receiving a signal commanding the operation of said relay, said drive means being connected to said control circuit for actuation by said control circuit, and adjustment means forming part of said control circuit for controlling the actuation point of said drive means so that the relay contacts open or close during a substantially zero current through said relay contacts.

Further aspects and features of the invention are to be found in the appended claims to which reference should now be made.

Attention is drawn to my European Patent Application No. 89 306522;7 publication No. 349 273, published on 3rd January 1990 (subsequent to the priority date of the present application). That application discloses by way of preferred example a relay mounted on a printed wiring board, with an optical sensor mounted on the other surface of the board such as to view arcing of the relay contacts through an aperture in the board and a window in the housing. A control circuit separate from the relay uses the output of the optical sensor to cause the relay contacts to open or close substantially at a zero crossing point of the AC current through them. The present application is differentiated from the disclosure of my earlier application in that the relay housing contains not only the contacts and the relay coil, but also the optical sensor and the control circuit, thereby making a simple plug-in unit and enabling the relay to be used without the need for such a complex printed circuit board to mount it.

## BRIEF DESCRIPTION OF THE DRAWINGS

The present invention will now be described in more detail by way of example, with reference to the drawings in which:

FIGURE 1 is an isometric view of a relay having an arc sensor and a control circuit therein in accordance with this invention, and shown in exploded position with respect to a printed circuit board which supplies the power, the command signal, and is connected to the circuit load, with a portion of the relay cover broken away to show the internal components.

FIGURE 2 is an electrical schematic block diagram showing the relay, in association with a power supply and load circuit into which it is to be connected.

FIGURE 3 is a waveform diagram showing the current versus time and showing the relay command signal versus the same time base.

## DESCRIPTION OF THE PREFERRED EMBODIMENT

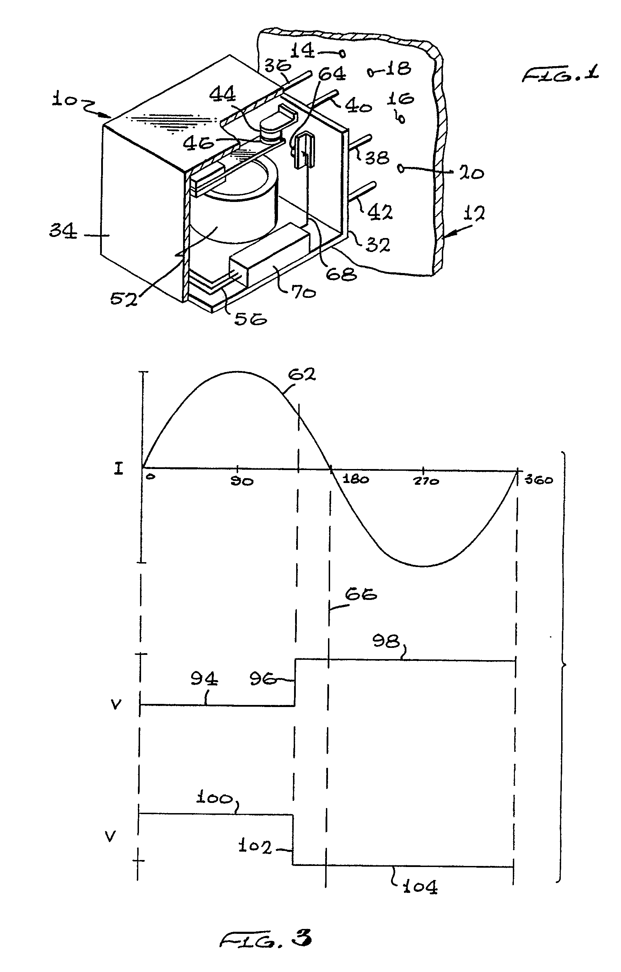

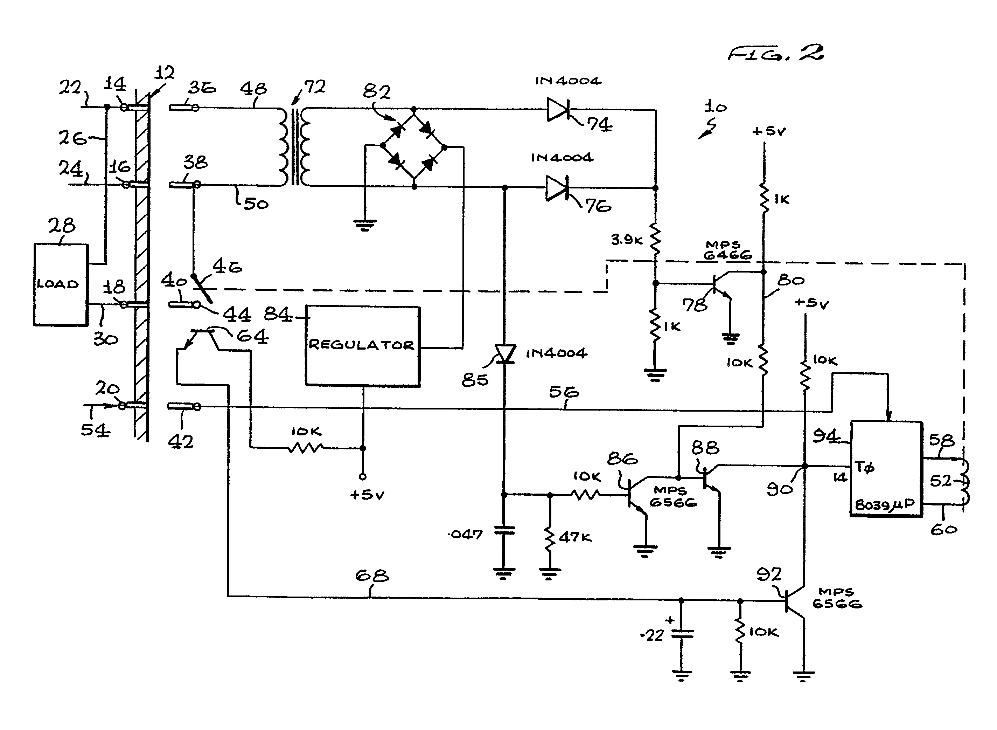

The preferred relay 10 is seen in FIGURES 1 and 2 and comprises a relay which has directly associated therewith, in the same housing, a control circuit including an arc sensor to minimize arcing of the relay. The relay 10 is shown in association with the printed wiring board 12 which has corresponding socket openings to permit the plugging in of the relay 10. As seen in FIGURE 2, the printed wiring board has thereon socket openings 14, 16, 18 and 20. Power lines 22 and 24 are connected to socket openings 14 and 16. Line 22 is connected through line 26 to load 28. The load is also connected by line 30 to socket opening 18. The load may be any conventional load and may be inductive or capacitive. Specifically, the load may be an electric heater. The load 28 may be mounted directly in association with the printed wiring board or may be separate therefrom by having suitable leads from the board to the load.

Relay 10 has a base 32 on which most of the structure is mounted. A cover 34 covers the internal components of the plug-in relay 10. The cover and base form a relay housing. Most of the components are mounted on the base. The plug-in relay 10 has pins 36, 38 which are sized and positioned to be received within the sockets in the printed wiring board to both correctly position the relay and to make power and signal connections. Pin 40 is connected to the fixed relay contact 44, and the moving relay contact 46 is connected to pin 38. Pins 36 and 38 are respectively connected by lines 48 and 50 to transformer 72. Transformer 72 supplies both power and cycle information to the relay control circuit, which is most of the relay block diagram in FIGURE 2. Relay coil 52 controls the opening and closing of the moving contact 46 with respect to the fixed contact 44, and thus controls the electric power supply to load 28.

Line 54 is connected to socket 20, which, in turn, supplies pin 42, which is connected to line 56. Line 54 and its connected line 56 in the relay supply the command signal from external sources, which calls for opening and closing of the relay. Relay 10 is a normally closed relay in the sense that, when its coil 52 is not energized, the moving contact 46 is in electrical contact with fixed contact 44. In conventional systems, the command line 56 is connected directly to coil 52 so that, when a command to open the relay is received, coil 52 is energized and moving contact 46 moves away from the fixed contact 44 to open the circuit.

Secured within the relay housing and positioned to receive visible or other emissions as the result of arcing is radiation sensing device 64. As seen in FIGURE 1, the radiation sensor 64 is mounted on a bracket secured to the base 32. The sensing device 64 is conveniently a visible light sensing diode. When it senses radiation, the light sensing device 64 sends a signal through line 68 to the control circuit with its signal corresponding to the arcing of the contacts 44 and 46. While a visible signal is described, arc radiation in other frequencies can be detected and employed as arc sensors.

Referring to FIGURE 2, it is seen that the AC lines 48 and 50 feed signal transformer 72 which has its secondary connected through a pair of IN 4004 diodes 74 and 76. Both diodes are connected to the gate of MPS 6566 transistor 78. The collector line 80 of the transistor has a high pulse at each voltage zero crossing of the supply lines 10 and 12. Connected between the output lines of the signal transformer is full-wave rectifier bridge 82 which supplies power to regulator 84, which supplies voltage to the circuit.

The input to rectifier 76 is also connected to the input of IN 4004 diode 85, which has its output connected through a network to the base of MPS 6566 transistor 86. The collector of transistor 86 and the signal line 80 are both connected to the base of MPS 6566 transistor 88. The function of this circuit is to cancel alternate pulses in line 80 and invert. The output signal in line 90 is high with a low pulse at alternate voltage zero crossings.

The sensing device 64 shown in FIGURE 2 is a light-sensing LPT 80 photo-transistor. On the other hand, while it is most convenient to observe the arc by means of its visible light output, other types of sensors may be alternatively employed so long as they indicate the timing and duration of the arc. Line 68 is connected to the gate of MPS 6566 transistor 92, and the collector of this transistor is also connected to signal line 90. The result is that the signal in line 90 is held low for the duration of any arc observed by the sensor 64.

Line 90 is connected to terminal 14 of logic and memory microprocessor 94. Microprocessor 94 is programmed as a logic device. Whenever it is instructed to open a relay contact by a command signal in command line 56, the logic device actuates relay opening at a subsequent zero crossing indicated in line 90. If an arc is observed by the sensor 64, the logic device measures the duration of the arc and places the duration information in memory. Each subsequent relay opening command causes the logic device to look to the memory and add the remembered time to the zero voltage crossing point signaled by line 90 before actuating the relay by an actuation signal in lines 58 and 60. Thus, the relay 10 is caused to open its contact 46 at a zero current crossing so that there is no opening arc. This results in long relay life. The entire electronic control system can be housed in a single package within the relay housing, and the electronics may be assembled as a single integrated circuit chip or may be assembled as a hybrid structure of a chip together with discrete components. In the present case, everything in FIGURE 2 to the right of printed wiring board 12 is within the relay housing, and the semiconductor electronics is housed in package 70 shown within the relay housing in FIGURE 1.

FIGURE 3 shows the operational characteristics of the relay with its built-in control system which minimizes arcing. At the top of FIGURE 3, curve 62 represents the current versus time of a single cycle of the alternating current supplied through the load 28. The current line 62 is optimally a sine wave and is shown in the single cycle in FIGURE 8, with a positive current flow from 0 to 180 degrees and a negative current flow from 180 to 360 degrees. A zero crossing of the current is achieved at 0, 180, and 360 degrees. The zero crossing at 180 degrees is indicated by the timing line 66. The current curve is shown as an idealized sine wave in FIGURE 3 for convenience of illustration. The middle curve of FIGURE 3 represents the voltage to relay coil 52 of a conventional relay of the "normally closed" type so that it requires actuation voltage to the relay to open the contacts. In its low state represented by line 94, the relay is closed. At the time represented by rising line 96, the voltage to relay coil 52 goes to the high state represented by line 98 and, after a very short period of time less than a half cycle, the relay contacts are opened. As is well known, when relay contacts are opened with current flowing therethrough, an arc is drawn, and this arc burns the relay contacts and reduces the life of the relay. In conventional circuits, there is no control over the actuation timing of the relay with respect to the current wave therethrough. Thus, the time 96 may occur at any point in the cycle between 0 and 360 degrees, and the chance that it will occur at one of the zero current crossings, such as indicated by line 66, is small. For this reason, the life of a conventional relay is greatly reduced.

At the time indicated by time line 96, a signal is delivered on command line 56 to command opening of the relay. By previous experience, the control circuit memory knows that the actuating signal in line 58 must be delayed from the command at line 96 to a later point so that actual contact opening occurs at the zero point represented by line 66. The bottom waveform in FIGURE 3 illustrates the command signal for a normally open relay. With the signal high at signal level 100, the relay is closed. With a dropout of command signal in line 56 at timing line 102, the control circuit maintains energization of the relay coil until close to the timing line 66, whereupon the actuating signal in line 58 goes to the low level to drop out the relay coil 52 to open the contact 46. This state is at signal level 104.

As a particular utilization circuit, a 16 ampere, 230 volt "Calrod" heater load is supplied through a suitable plug-in relay. Without the apparatus and method of this invention, the normally expected relay life is about 200,000 cycles. Since the contact burning rate is extremely small when the apparatus and method of this invention are employed, relay life under the same circumstances but with the inventive adjustment of the actuation point for no arcing of about 5,000,000 cycles can be achieved without relay failure. The greater the current in the load circuit, the more arcing occurs with the consequence of more contact damage. The amount of arcing is a function of the load reactance. A purely resistive load would produce minimum relay contact damage, but even a "Calrod" heater load is sufficiently inductive to cause relay contact damage of the amount noted above. Thus, different relay life improvement can be seen with different loads.

In the present case, the utilization circuitry 28 is considered to be the heater in a deep-fat fryer, and the command signal in line 56 is a signal related to the deep-fat temperature so that the temperature of the deep fat can be carefully controlled. In other types of cooking or other utilizations, the command signal 56 may be a timing circuit which terminates power to the utilization circuit. It must be observed that the energization in lines 58 and 60 does not occur at 0, 180, or 360 degrees on the current wave, but occurs sufficiently before so that the contacts actually open at the zero point. In such a case, the control circuit would be one in which a command signal is received in line 56 signaling the desire for relay opening, followed by an analysis of the voltage curve; and when the voltage curve reaches a predetermined point on its cycle, relay coil 52 is energized so that the moving contact opens when the current curve is at one of its zero points.

This invention has been described in its presently contemplated best modes, and it is clear that it is susceptible to numerous modifications, modes and embodiments within the ability of those skilled in the art and without the exercise of the inventive faculty. Accordingly, the scope of this invention is defined by the scope of the following claims.

## Claims

1. A relay comprising:
a fixed contact and a movable contact for connection to a power supply source and a load for controlling the flow of current from the source to the load, drive means connected to said movable contact for moving said movable contact into and out of contact with said fixed contact to control current supply to the load;
observation means positioned adjacent said relay contact for observing electric arcing between said contacts occurring during movement of said movable contact with respect to said fixed contact;
a control circuit;
a relay housing with said contacts, said drive means, said observation means and said control circuit mounted on said relay housing;
command signal connection means forming part of said control circuit for receiving a signal commanding the operation of said relay, said drive means being connected to said control circuit for actuation by said control circuit; and

adjustment means forming part of said control circuit for controlling the actuation point of said drive means so that the relay contacts open or close during a substantially zero current through said relay contacts.

2. The relay of claim 1, further including means connected to said control circuit for sensing the zero voltage crossing points for timing reference to said actuation point.

3. The relay of claim 1, wherein said means for observing comprises a light-sensing device positioned to receive optical arc signals and connected to said control circuit to signal the presence of arcing upon opening or closing of the relay contacts.

4. The relay of claim 3, wherein said relay is a plug-in relay having pins thereon for plugging into sockets connected to a source of electric current, the load and the source of the command signal.

5. The relay of claim 1, wherein said means for observing comprises an arc radiation sensing device positioned to receive arc radiation signals and is connected to said control circuit to signal the presence of arcing upon opening or closing of the relay contacts.

6. The relay of claim 5, wherein said relay is a plug-in relay having pins thereon for plugging into sockets connected to a source of electric current, the load and the source of the command signal.

7. A relay comprising:

a relay housing;

relay contacts on said relay housing;

a control circuit on said relay housing;

operating means connected to said control circuit for causing the opening of said relay contacts in an AC line;

an arc sensor mounted on said relay housing and positioned with respect to said relay contacts to detect arcing emissions resulting from opening of the relay contacts when current is passing therethrough, said arc sensor being connected to said control circuit to signal arcing to said control circuit;

a zero voltage sensing circuit connected to the AC line and connected to said control circuit to provide a time reference for the AC line to said control circuit; and

command signal means connected to said control circuit to signal the opening of the relay contacts, said control circuit being connected so that when a relay opening command signal is received and said control circuit causes opening of said relay contract and an arc is detected, said control circuit is adjusted to cause relay operation to open the relay contacts at a different point on the AC current cycle on subsequent actuation so that, upon subsequent relay opening, the control circuit is adjusted so that the relay contacts open at a zero current point on the AC cycle and no arcing is detected.

8. The apparatus of claim 7, wherein a utilization circuit is connected to said relay contacts, said utilization circuit being a cooking heater load and said command signal means connected to said control circuit being a cooking condition command signal.

9. The apparatus of claim 8, wherein said cooking circuit is an electric cooking heater and said cooking condition command signal circuit is a signal corresponding to adequate cooking temperature so that there is need to disconnect said cooking heater load from the AC power supply.

10. The method of controlling the relay which has, mounted together on the relay, contacts for connection into an AC load line, an actuation device for controlling the contacts, a radiation sensor positioned adjacent the contacts, and an actuation control circuit, the method comprising the steps of:

detecting the alternating voltage state at the point along the AC cycle at which the relay contacts are opened;

observing radiation at the opening of the contacts and when there is radiation;

adjusting the actuation control circuit to adjust the time of relay opening with respect to the AC wave to a different point on the AC wave so that the relay arcing radiation is minimized on subsequent relay opening to enhance contact life.

11. The method of claim 10, wherein the adjusting step is automatically achieved in the control circuit which receives a radiation signal, an AC wave signal and a relay opening command signal.

12. The method of claim 10, and including the preliminary step of plugging the relay with its contacts, actuation device, sensor and actuation control circuit into a printed wiring board.

13. The method of claim 10, including the previous step of connecting the relay to energize a cooking heater and connecting the command signal to a cooking signal source.

14. The method of claim 10, wherein the relay arc radiation detector is an electronic detector and the signal therefrom is connected to automatically adjust the relay operating point with respect to the AC current wave.

FIG.1

FIG. 3

FIG. 2

EP 0 429 158 A2